# EUROPEAN PATENT APPLICATION

(11) **EP 1 802 082 A1**
(43) Date of publication of application: **27.06.2007**
(21) Application number: 05781336.2
(22) Date of filing: 01.09.2005
(51) Int. Cl.: H04M 1/00, H04B 7/26, H04M 1/725

(54) **INFORMATION TERMINAL**

(30) Priority: 03.09.2004 JP 2004257002
(71) Applicant: MATSUSHITA ELECTRIC INDUSTRIAL CO., LTD., Osaka 571-8501 (JP)
(72) Inventor: NAKAO, Masatoshi., Matsushita El.Ind.Co.Ltd, Osaka-shi, Osaka 540-6319 (JP); YAGI, Toshio., Matsushita El.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/016018
(87) International publication number: WO 2006/025493

(57) **Abstract**

The present invention is to provide an information terminal which does not deteriorate reproduction quality of audio contents and enable clear hearing of a call sound.

The information terminal includes: sound reproducing means 11 for reproducing audio contents, reproducing means 14 for reproducing a call sound, sound image location control means 15 for varying sound image locations of the audio contents and the call sound, and sound mixing means 16 for mixing the audio contents and the call sound of which the sound locations have been varied and outputting the mixture.

## Description

### <Technical Field>

The present invention relates to an information terminal having a telephone function.

### <Background Art>

Information terminals having telephone functions used in present often serves to reproduce audio contents by the use of a music reproducing player, a radio receiver, a TV receiver. In the past, in order to talk over the telephone while reproducing audio contents, a reproducing volume of the audio contents may be decreased, the reproduction may be stopped, or a frequency characteristic may be changed in order to distinguish the audio contents from the call sound so that easily understandable calls are made (for example, see Patent Document 1). In addition, there is proposed a method of muting reproduced sounds so that hardly understandable calls are not made (for example, see Patent Document 2) and proposed a method of changing respective volume balances of the reproduced sounds of the audio contents and the call sound on the basis of set values while talking over the telephone (for example, see Patent Document 3).
Patent Document 1: Japanese Unexamined Patent Application Publication No. 2001-14167
Patent Document 2: Japanese Unexamined Patent Application Publication No. 2002-27029
Patent Document 3: Japanese Unexamined Patent Application Publication No. 2003-258988

### <Disclosure of the Invention>

### <Problems that the invention is to solve>

However, in the techniques used in the past for making a call while reproducing audio contents, reproduction conditions of the audio contents are changed to listen to a clear call sound. Therefore, there is a problem with deterioration in reproduction quality of the audio contents.

An object of the present invention is to provide an information terminal which does not deteriorate reproduction quality of audio contents and allows a clear call sound to be generated.

### <Means for Solving the Problem>

The information terminal of the invention having telephone functions includes: reproducing means for reproducing audio contents; reproducing means for reproducing a call sound; sound image location control means for varying sound image locations of the audio contents and the call sound; and mixing means for mixing the audio contents and the call sound of which the sound image locations have been varied and outputting the mixture. According to such a configuration, by varying the sound image of the audio contents, reproducing conditions of the audio contents can be maintained. Therefore, the reproduction quality of the audio contents is not deteriorated and the call sound can be clearly listened.

In the invention, the sound image location control means spatially separates a listening location of the audio contents and a listening location of the call sound from each other. According to such a configuration, by spatially separating the listening location of the audio contents and the listening location of the call sound, the audio contents and the call sound can be independently recognized.

Specifically, the sound image location control means separates the listening location of the audio contents and the listening location of the call sound in up and down, right and left, and front and rear directions, thereby spatially disposing the listening locations at different locations.

In the invention, the sound image location control means controls a variation ratio of the sound image locations. According to such a configuration, since the variation ratio of the sound image location is controlled, a dramatic variation of the sound image location can be prevented.

The sound image location control means detects a reception call and varies a sound image location thereof. In addition, the sound image location control means detects en end of a call and restores the sound image location having been varied to an original location, thereby appropriately corresponding to the reception call generated at the time of reproducing the audio contents.

In the invention, the information terminal includes selection means for selecting a type of the variation of the sound image location. According to such a configuration, the sound image location can be varied depending on a user's taste or kinds of the contents.

According to an calling method of the invention employed in an information terminal having a telephone function and an audio contents reproducing function, sound image locations of the audio contents and a call sound are varied and the audio contents and the call sound of which the sound image location have been varied are mixed.

### <Advantage of the Invention>

According to the invention, the reproducing conditions of the audio contents can be maintained by varying the sound image of the audio contents. Therefore, the reproduction quality of the audio contents is not deteriorated and the call sound can be clearly listened.

### <Brief Description of the Drawings>

Fig. 1 is a conceptual block diagram illustrating a calling device according to an embodiment of the invention.
Fig. 2 is a flow chart illustrating a sequence of a calling method according to an embodiment of the invention.
Fig. 3 is an image view illustrating a control method of sound image location according to the invention.
Fig. 4 is a conceptual block diagram illustrating a calling device according an embodiment of the invention.
Fig. 5 is an image view illustrating a control method of other sound image location according to the invention.
Fig. 6 is an image view illustrating a control method of sound image location at the time of a reception call or a phone call.

### <Reference Numerals>

11: sound reproducing means
14: calling means
15: sound image location control means
16: sound mixing means
18: sound output means

### <Best Mode for Carrying Out the Invention>

Hereinafter, an embodiment of the invention will be described with reference to the drawings.

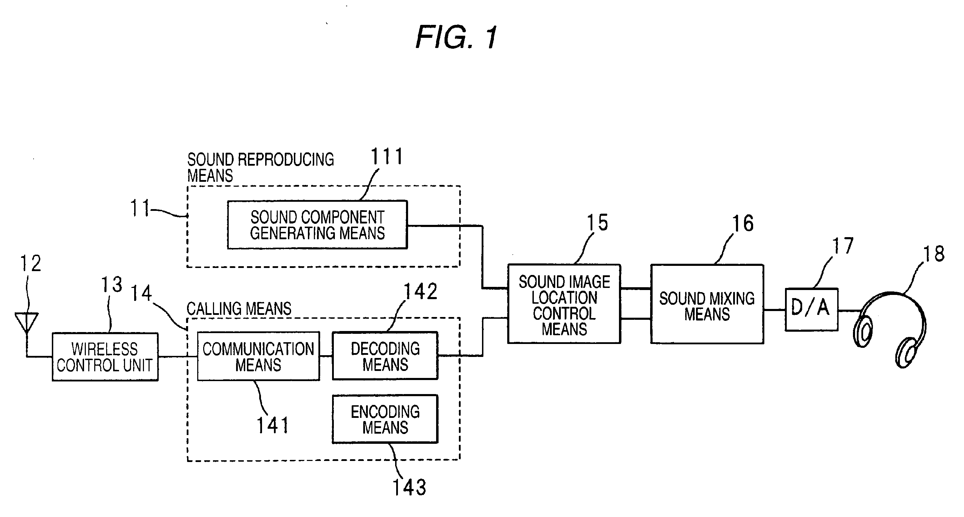

Fig. 1 is a block diagram illustrating a structure of a cellular phone which is a calling device according to the invention. In the present embodiment, the calling device is exemplified by the 'cellular phone'. However, the invention is not limited to the cellular phone and can be widely employed in an apparatus having a communication function such as a PDA including a communication apparatus, a television including a communication function, and a fixed telephone. In addition, the communication with the outside is not limited to a wireless communication and a wired communication is also possible.

In Fig. 1, the communication device according to the invention includes sound reproducing means 11, transceiving antenna 12, wireless control unit 13, calling means 14, sound image location control means 15, sound mixing means 16, and a digital/analog (D/A) converter 17.

The sound reproducing means 11 includes sound component generating means 111 for reproduced sound information recorded in a recording medium (not shown) in which the sound component generating means serves to reproduce the sound information by a music reproducing player stored therein, reproduce (generate) a sound signal from the reception signal of a TV broadcasting, or read out a linear signal such as a microphone from linear signal output means. The transceiving antenna 12 receives electric wave of the call information transmitted from the outside (for example, base station) via a telephone line.

The wireless control unit 13 serves to convert wireless signal obtained by the transceiver antenna 12 to electric signal. The calling means 14 reads out a signal having a predetermined frequency from the electric signal outputted from the wireless control unit 13, and then performs an amplification process, frequency conversion, and demodulation process, thereby outputting calling information as the sound information.

The calling means 14 includes communication means 141, decoding means 142, and encoding means 143. The communication means 141 reads out the signal having the predetermined frequency from the electric signal outputted from the wireless control unit 13, and then performs the amplification process, frequency conversion, and demodulation process.

The decoding means 142 serves to decode the demodulated calling information of the opposite party to the sound signals. The encoding means 143 serves to encode the voice signal inputted by a user of the calling device, and the encoded voice information is transmitted to the outside via the communication means 141, the wireless control unit 13, and the antenna 12.

The sound image location control means 15 serves to input the sound information obtained by the sound generating means 11 and the calling means 14 and to control the sound image locations of all sound information. The sound image location can be controlled, for example, by the use of a model imitating a device for detecting time difference information or frequency component difference of a listening mechanism being aware of the locations by sensing an extremely short time difference (horizontal direction) with which a right ear and a left ear receives the sound signal or a difference between frequency components (horizontal direction), at the time of detecting a source location of the sound heard by a person. The sound mixing means 16 serves to mix respective sound information of which sound image location is controlled.

Examples of the sound output means 18 include, for example, a head phone having channels on the left and on the right (two channels in total = stereo), and a speaker system which is a stationary type having channels on the left and on the right or a stored type included in a main body of the telephone. The sound output means 18 enables the sound to be listened as the sound in which the mixed sound images of each sound information are located in the a predetermined location. Hereinabove, both speaker and headphone are used for a stereo-type reproduction and include channels of one on the left side and one on the right side. However, the speaker and the headphone may include at least two or more of sound generating sources such as a 5.1 CH surrounding speaker.

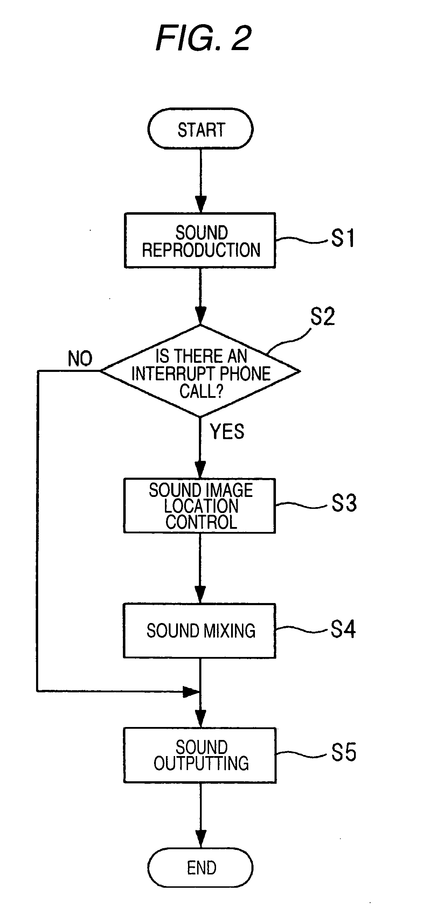

Next, an operation of the calling device having such a configuration will be described with reference to a flow chart shown in Fig. 2. When a user listens to the music, for example, reproduced by a sound reproducing player stored in the main body of the calling device, a call may be started by an interrupt of a reception call. In this case, the call can be continued while reproducing the music.

Examples of the sound component generating means 111 of the sound reproducing means 11 include a TV reception unit or a radio reception unit which reproduce sounds, in addition to the music reproducing player. The sound information reproduced by one of those units is outputted by the sound output means 18 via the sound image location control means 15, the sound mixing means 16, and the digital/analog conversion unit 17 (Step S1).

When the music is played by reproducing the sound information by the use of the music reproducing player, it is determined whether or not the interrupt of the reception call is received (Step S2). When there is the interrupt of the reception call, the telephone call is started. In this case, voice information of the opposite party of the call is received to the wireless control unit 13 via the antenna 12, and the received (voice) information is subjected to a reception process performed by the communication means 141 of the calling means 14. In addition, the received information is decoded into the voice information of the opposite party by the decoding means 142 and then outputted to the sound image location control means 15.

The sound image location control means 15 controls the sound image locations of each sound information from the sound reproducing means 11 and the calling means 14 (Step S3). In the process of controlling the sound image location, the sound image information of two channels is spatially separated from each other under the location control. Thus, a person can hear the sound images of the call sound and the music (background sound) at a different ear.

The sound information, locations of which are separated, are inputted to the sound mixing means 16 and digitally mixed (Step S4). Thus mixed information is converted into the analog sound signal by the digital/analog conversion unit 17 and outputted as the sound, of which location is separated, by the head phone speaker on the left and right channels of the sound output means 18 (Step S5).

The sounds outputted from the sound output means 18 can be independently and clearly recognized without a change in an output level in a state where the sound image of the sound information reproduced by the sound reproducing means 11 and the sound image of the voice information at the time of calling are separated. Therefore, the call can be clearly carried out without a disturbance such as the reproduced music or the speaking voices. When there is no call by the interrupt of a reception call in Step S2, the sound information outputted from the sound reproducing means 11 can be continuously reproduced by the sound output means 18.

A person has a function of understanding a spatial positional relation (location) by recognizing the location and the direction of the sound source. Therefore, even when a plurality of 'sounds' or voices are simultaneously heard and are spatially separated in locations from each other, the locations of the sounds can be recognized.

On the other hand, when two speakers of the speaker system generate the sounds, the sound sources are subjected to a signal process so as to control the sounds so that the sounds are generated at locations different from the locations of the speakers (sound image location control). That is, as well as the headphone speaker, the location of the sound can be moved within a pseudo space of the person who is listening to the sound by controlling the signal for a specific sound.

Accordingly, since the 'sound' which may disturb the call is located to the location apart from the calling voice, the clear call can be carried out without controlling the volume or adjusting a sound pressure level in accordance with the frequency.

Therefore, even when the telephone call is made while the music is reproduced by the music reproducing player or the sound of the TV broadcasting, it is possible to prevent the call from being disturbed by the music reproduce by the sound reproducing player or being made it difficult to recognize. As a result, the user can enjoy the call while hearing the music with a pleasant feeling.

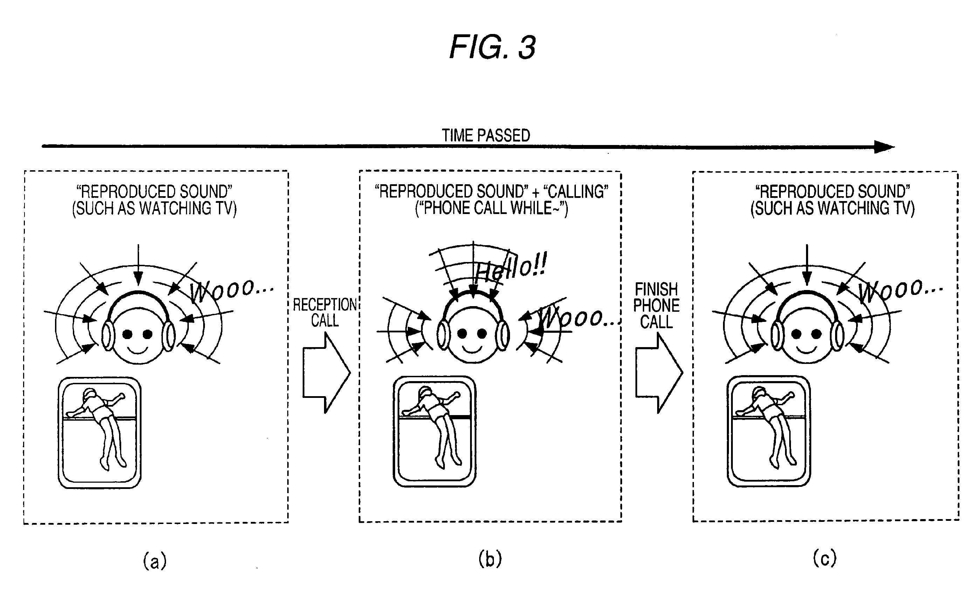

Fig. 3 illustrates a control of sound image location by the sound image location control means 15 by the use of an image. Fig. 3(a) shows the sound image at the time of the sound reproduction such as a TV watching and illustrates a state where the listener hears the sound "Wooo" thereabout from the sound output means 18 such as two headphone speakers of the headphone.

Here, when the calling signal is received while reproducing the sound, the call "Hello" is carried out while reproducing "Wooo". In this case, as shown in Fig. 3(b), the sound image of the reproduced sound "Wooo" is moved such to be gradually separated in a right direction and a left direction from the total periphery thereof and controlled such to be sounded from the both right and left sides. In addition, the calling voice "Hello" is controlled to be clearly sounded from a top of a head. Then, when the call is finished, the sound is only reproduced. Accordingly, the sound images of the reproduced sound separated on both sides are located to the location same as Fig. 3(a) and controlled such to be sounded from total periphery of the listener as shown in Fig. 3(c).

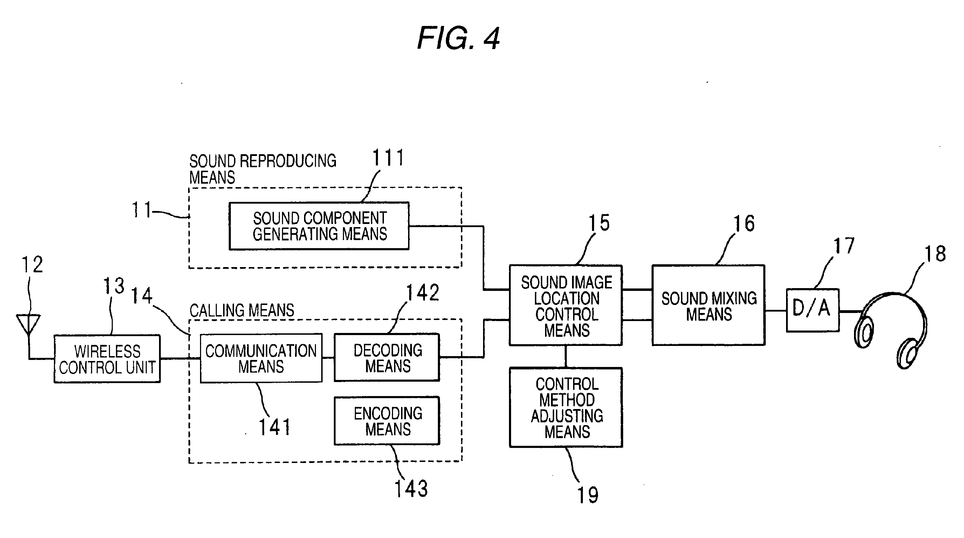

Fig. 4 is a block diagram illustrating a configuration of a calling device according another embodiment of the invention. The calling device includes control method adjusting means 19, in addition to the calling device shown in Fig. 1 and has the same configuration as the calling device shown in Fig. 1. Therefore, the description thereof will be omitted. In Fig. 4, the control method adjusting means 19 is connected to the sound image location means 15. The control method adjusting means 19 serves to provide the user with the control method for controlling the sound image location and to select the method by the user.

The control method of the sound image location may be selected by the control method adjusting means 19 at the time of starting the sound reproduction process (Step S1 shown in Fig. 2), or at any time after starting the sound reproduction process , and before the sound mixing process (Step S4 in Fig. 2).

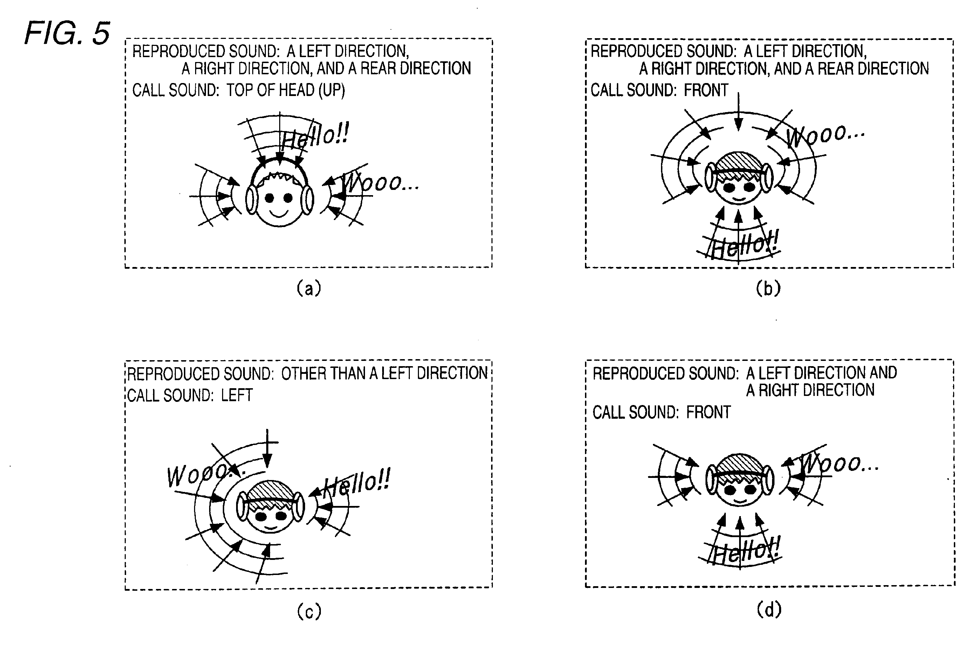

The sound image location can be controlled, for example, by the use of a model imitating a device for detecting time difference information or frequency component difference of a listening mechanism being aware of the locations by sensing an extremely short time difference (horizontal direction) with which a right ear and a left ear receives the sound signal or a difference between frequency components (horizontal direction), at the time of detecting a source location of the sound heard by a person. As the control method of the sound image location by the control method adjusting means 19, patterns shown in Fig. 5 can be considered.

Fig. 5(a) shows a first pattern and is a front view of a person's face. In this case, the sound image of the reproduced sound "Wooo" is located in a left direction, a right direction, and a rear direction of the head part and the sound image of the phone call voice "Hello" is located to the top of the head. Therefore, in this case, the user of the cellular phone has the same sound image location as a person talking with a standing person in a state where the person sits. Therefore, the user of the cellular phone can talk on the phone with the opposite party of the call without any unpleasant feeling.

Fig. 5(b) shows a second pattern and is a top view of a person's face. In this case, the sound image of the reproduced sound is located in the left direction, the right direction, and the rear direction of the head part and the sound image of the call sound is located to the front. Therefore, in this case, a calling state is described where the person is talking to a person standing right before him.

Fig. 5(c) shows a third pattern and is a top view of a person's face. In this case, the reproduced sound is sounded from the front or rear side, and the right side other than the left side of the head and the sound image of the call sound is located on the left of the head part. Therefore, in this case, a calling state is described where the person is talking on the telephone with one ear same as the telephone used in the past.

Fig. 5(d) shows a fourth pattern and is a top view of a person's face. In this case, the sound image of the reproduced sound is located in the left direction and the right direction of the head part and the call sound is located toward the front. Therefore, in this case, a calling state is described where the person is talking to the opposite party standing right before him, and this case is suitable for a case where the reproduced sound like a news broadcasting is reduced and outputted at the time of calling.

By controlling the sound image location, an environment from which easily understandable call sound is achieved can be provide depending on kinds of the contents such as the news broadcast, even in case of reproducing contents such as the music or the like.

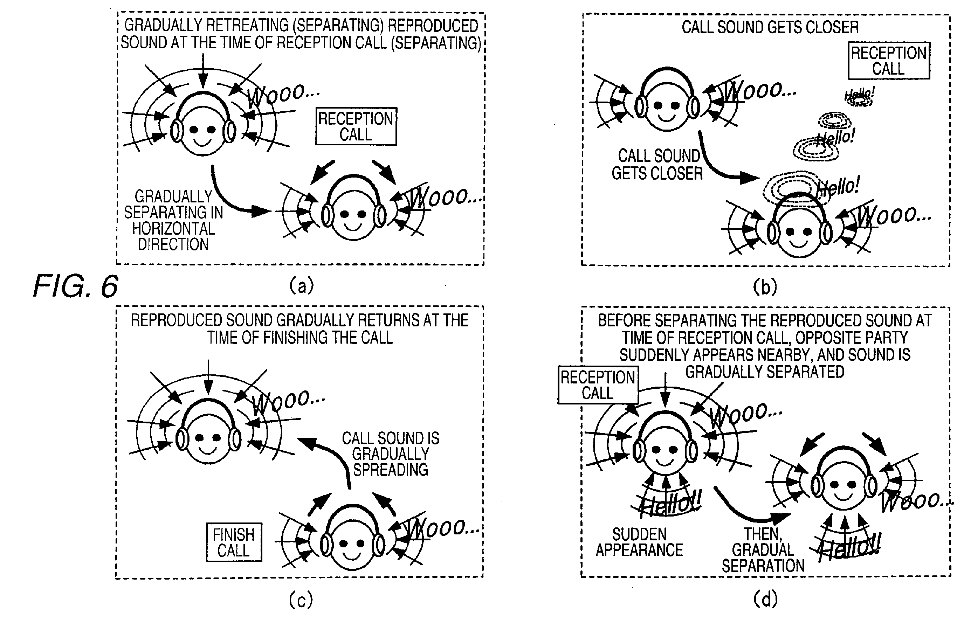

Fig. 6 is an explanatory view illustrating a control method of sound image location when there is the interrupt of the reception call. Fig. 6(a) shows a case where the reproduced sound in the periphery of the head part is gradually retreated (separated) in a horizontal direction (right and left direction) of the head part at the time of receiving the call.

Fig. 6(b) shows a case where the call sound gets gradually closer to the top of the head part from a location apart from the head part and located thereon when a reception call is made while a user listens to the reproduced sound in a state where the sound images are located on the left and right sides of the head part. In addition, Fig. 6(c) shows a case where the sound image of the reproduced sound is gradually returned so as to be enlarged around the head part when the sound image of the reproduced sound is located on the left and right sides of the head part as shown in Fig. 6(a) at the time of the signal-reception and the call is finished.

Fig. 6(d) shows a case where the voice of the opposite party before separating the reproduced sound is suddenly sounded from the front side, and then only the sound image of the reproduced sound is controlled to be gradually located on the left and right of the head part.

As described above, by controlling the sound image location of the reproduced sound at the time of signal-receiving or finishing the call, an easily understandable acoustic field of the reception call sound and the call sound can be generated.

Accordingly, since the calling device includes the calling means 14 for receiving the voice information and inputting the sound information generated by the sound reproducing means 11, sound image location control means 15 for controlling the sound image locations of the respective sound information, the sound mixing means 16 for mixing the respective sound information in which the sound image location is controlled by the sound image location control means 15, and the sound output means 18 having at least one pair of speakers which outputs the respective sound information mixed by the sound mixing means 16, the quality of the reproduced sound is not degraded even in case of reproducing the contents and the clear phone call is provided.

The invention has been described in detail and with reference to specific embodiments thereof, but it will be apparent to a person skilled in the art that various changes and modifications can be made therein without departing from the spirit and scope thereof.

The present application is contrived on the basis of Japanese Patent Application No. 2004-257002 applied on September 3, 2004

### <Industrial Applicability>

The present invention can be suitably used in the calling device and the calling method which has an effect for separately listening the generated or reproduced sound information and the voice information of the calling voice clearly and allows the clear phone call while the sound information obtained from the TV broadcast or the music reproducing player is continuously played.

## Claims

1. An information terminal having a telephone function, comprising:
reproducing means for reproducing audio contents;
reproducing means for reproducing a call sound;
sound image location control means for varying sound image locations of the audio contents and the call sound; and
mixing means for mixing the audio contents and the call sound of which the sound image locations have been varied and outputting the mixture.

2. The information terminal according to Claim 1, wherein the sound image location control means spatially separates a listening location of the audio contents and a listening location of the call sound from each other.

3. The information terminal according to Claim 2, wherein the sound image location control means separates the listening location of the audio contents and the listening location of the call sound in up and down, right and left, and front and rear directions.

4. The information terminal according to any one of Claims 1 to 3, wherein the sound image location control means controls a variation ratio of the sound image locations.

5. The information terminal according to any one of Claims 1 to 4, wherein the sound image location control means detects a reception call and varies a sound image location thereof.

6. The information terminal according to Claim 5, wherein the sound image location control means detects an end of a call and restores the sound image location having been varied to an original location.

7. The information terminal according to any one of Claims 1 to 6, further comprising selection means for selecting a type of the variation of the sound image location.

8. A calling method in an information terminal having a telephone function and an audio contents reproducing function, wherein the sound image locations of audio contents and a call sound are varied and the audio contents and the call sound of which the sound image locations have been varied are mixed.
